# EUROPEAN PATENT SPECIFICATION

(11) **EP 1 739 958 B1**
(45) Date of publication and mention of the grant of the patent: **08.07.2009**
(21) Application number: 06009237.6
(22) Date of filing: 04.05.2006
(51) Int. Cl.: H04N 5/225, G02B 7/02

(54) **Electronic device and image capture module thereof**
Elektronische Vorrichtung und ihr Bildaufnahmemodul
Dispositif électronique et module de capture d'image correspondant

(30) Priority: 28.06.2005 CN 200510080267
(43) Date of publication of application: 03.01.2007
(73) Proprietor: ASUSTeK Computer Inc., Peitou Taipei (TW)
(72) Inventor: Lee, Yi-Ming, Taipei Taiwan (CN); Chen, Yen-Kuang, Taipei Taiwan (CN); Chen, Yung Chuan, Taipei Taiwan (CN)
(74) Representative: TER MEER - STEINMEISTER & PARTNER GbR

(56) References cited:
- EP-A- 1 443 755
- EP-A2- 1 318 667
- WO-A-20/04003618
- JP-A- 2003 043 330
- US-A1- 2005 122 419
- US-B1- 6 898 030

## Description

### Field of Invention

The invention relates to an electronic device and an image capture module thereof and, in particular, to an electronic device and an image capture module thereof that are designed for preventing particles pollution.

### Related Art

With great progress in the technology, photograph function is not only carried out in digital cameras and video recorders but also in portable communication devices extensively. Nowadays, the portable communication devices with the photograph function are a main tendency in the market.

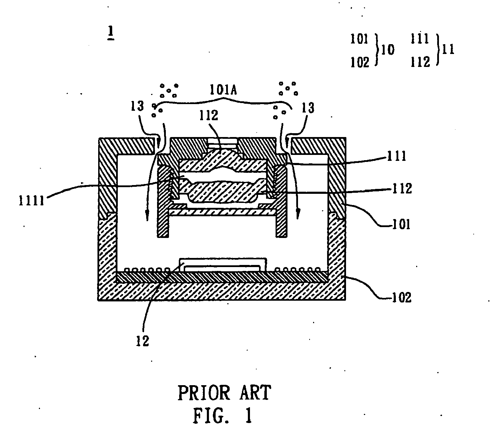

The conventional portable communication device having photograph function utilizes an image capture module to capture an image of object. Then, image information is recorded on a recording medium. With reference to FIG. 1, the conventional image capture module 1 includes a housing 10, a camera unit 11, and a sensor 12. The housing 10 is formed with a front cover 101 and a rear cover 102. In this case, the front cover 101 has an opening 101A. The camera unit 11 including a barrel 111 and a lens assembly 112 is accommodated in the housing 10. The barrel 111 includes a container 1111 where the lens assembly 112 is accommodated. Therefore, the opening 101A of the front cover 101 exposes a portion of the camera unit 11. The sensor 12 is disposed between the camera unit 11 and housing 10 to receive a light beam passing the camera unit 11. Herein, the sensor 12 can be a charge coupled device (CCD) or a complementary metal oxide semiconductor sensor (CMOS).

The conventional image capture module 1 generally includes a focus system (not shown in the figure) and, in particular, when the focus system is an auto-focus system, the focus system can improve quality of the image picked up. Furthermore, the focus system includes a transmission element, which can drive the camera unit 11 close to or away from the opening 101A to reach an optimum position for focusing in accordance with the distance of the object placed.

As mentioned above, appropriate space 13 between the opening 101A of the housing 10 and the camera unit 11 is required to allow the camera unit 11 moving forwards and backwards, so that the camera unit 11 can smoothly move corresponding to the opening 101A.. However, the aforesaid space 13 may let the foreign tiny particles easily enter the image capture module 1 to affect the quality of the image picked up.

Therefore, according to the above-mentioned problems of the state of the art, it is a subjective to provide an electronic device and an image capture module thereof that are designed for blocking particles to enter themselves.

US 2005/122419 A1 discloses an image capture module according to the preamble of claim 1. Similar image capture modules are described in WO 2004/003 618 A1, US-B1-6 898 030, EP-A-1 443 755, JP 2003 043330 and EP-A2-1 318 667.

### SUMMARY OF THE INVENTION

In view of the foregoing, the invention is to provide an electronic device and an image capture module thereof that are designed for blocking particles to enter themselves and having a shock absorbing ability and wherein the image capture module has a focus system.

To achieve the above, an image capture module of the invention has the features indicated in claim 1.

To achieve the above, an electronic device of the invention has the features indicated in claim 9.

The electronic device and the image capture module thereof of the invention are by way of disposing an elastic shielding element between the camera unit and the housing. Specially, the shielding element is disposed around the camera unit such that the shielding element and the camera unit covers the first opening of the housing. Due to no space between the housing and the camera unit, the foreign particles are prevented from entering into the image capture module. Moreover, the shielding element can be elastic for absorbing the shock generated in the movement of the camera unit corresponding to the first opening. Therefore, the image capture module of the invention further has an absorbing shock effect. In addition, the surface of the shielding element can be designed for having a rough structure, such as a waved structure or a ladder structure. The rough structure is used to absorb or reflect the useless light beams for image generation so as to improve the quality of the image. Furthermore, the shielding element can be doped with mental particles to reduce interference of the electromagnetic wave.

### BRIEF DESCRIPTION OF THE DRAWINGS

The invention will become more fully understood from the detailed description given herein below illustration only, and thus is not limitative of the present invention, and wherein:
FIG. 1 is a schematic sectional view showing the conventional image capture module;
FIG. 2 is a schematic sectional view showing an image capture module according to a preferred embodiment of the invention;
FIG. 3 is a schematic exploded view showing an image capture module according to the preferred embodiment of the invention; and
FIG. 4 is a schematic sectional view showing an electronic device according to a preferred embodiment of the invention.

### DETAILED DESCRIPTION OF THE INVENTION

The present invention will be apparent from the following detailed description, which proceeds with reference to the accompanying drawings, wherein the same references relate to the same elements.

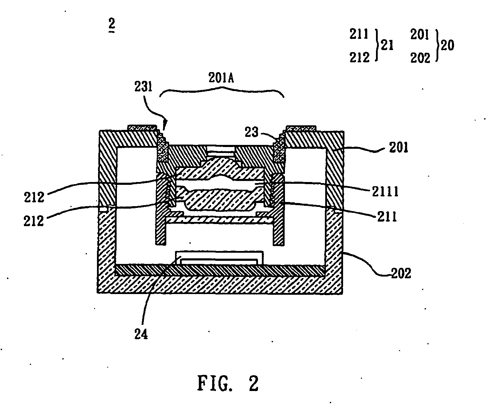

With reference to FIG. 2, an image capture module 2 according to a preferred embodiment of the invention includes a housing 20, a camera unit 21, and an elastic element 23. In the present embodiment, the elastic element 23 is as a shielding element disposing between the camera unit 21 and the housing 20.

As shown in FIG. 2, the hosing 20 includes a front cover 201 and a rear cover 202. The front cover 201 and the rear cover 202 are connected with each other to form the housing 20. The housing 20 has a first opening 201A, which is formed on the front cover 201 of the housing 20. The camera unit 21 is accommodated in the housing 20 and is adjacent to the first opening 201A. The first opening 201A exposes at least one portion of the camera unit 21.

As mentioned above, the camera unit 21 includes a barrel 211 and a lens assembly 212. The barrel 211 includes a container 2111 where the lens assembly 212 is accommodated. Herein, the lens assembly 212 has a plurality of lenses.

The elastic element 23 is disposed between the camera unit 21 and housing 20. One portion of the elastic element 23 is connected to the housing 20 and the other portion of the elastic element 23 surrounds the camera unit 21. With reference to FIG. 2, the front cover 201 of the housing 20 is connected with the camera unit 21 through the elastic element 23 such that the elastic element 23 and the camera unit 21 simultaneously cover the first opening 201A. Therefore, the hosing 20 and the camera unit 21 are tightly connected and have no space between them, so that the foreign particles are prohibited from entering into the image capture module 2.

In the present embodiment, the elastic element 23 can be made of an elastic material such as rubber or plastic. The image capture module 2 does auto-focus process and the camera unit 21 moves corresponding to the first opening 201A. The elastic element 23 is compressed when the camera unit 21 is close to the first opening 201 A and the elastic element 23 is restored when the camera unit 21 is away from the first opening 201A. In such manner, the elastic element 23 is provided for absorbing shock generated in the movement of the camera unit 21. Moreover, in the present embodiment, a surface 231 of the elastic element 23, on which the light beam is incident, has a rough structure such as a ladder structure (as shown in FIG. 2) or a waved structure. The rough structure can be integrately formed on the elastic element 23. Therefore, the useless light for the image generation can be effectively reflected and absorbed by the aforesaid rough structure, and the opportunity for the useless light entering into the camera unit 21 can be reduced. Additionally, the elastic element 23 can be doped with mental particles for impeding the interference of the electromagnetic wave.

The image capture module 2 of the present embodiment further can include a sensor 24 accommodated in the housing 20 and disposed between the camera unit 21 and the housing 20. The sensor 24 is used to receive a light beam passing through the first opening 201 A and the camera unit 21 orderly and then generate an image. In the present embodiment, the sensor 24 can be a charge coupled device (CCD) or a complementary metal oxide semiconductor sensor (CMOS).

Additionally, the image capture module 2 of the present embodiment further includes a transmission element (not shown in the figure), which drives the camera unit 21 close to or away from the first opening 201A. That is, when the image capture module 2 progresses auto-focus process, the camera unit 21 is driven by the transmission element to move corresponding to the first opening 201A.

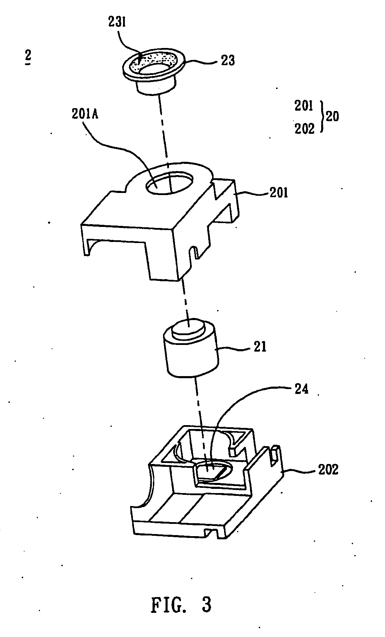

With reference to FIG. 3 for fully understand the content of the invention, it is a schematic exploded view of showing the image capture module 2 according to the preferred embodiment of the invention. The sensor 24 is accommodated in the rear cover 202 of the housing 20. The camera unit 21 is corresponding disposed with sensor 24. At least one portion of the camera unit 21 is accommodated in the rear cover 202. The front cover 201 is connected with the rear cover 202 to completely contain the camera unit 21 into the housing 20. The front cover 201 has the first opening 201A disposed opposite to the camera unit 21. The light beam passes through the first opening 201 A and the camera unit 21 and finally arrives at the sensor 24 to generate an image. The elastic element 23 is disposed between the front cover 201 and the camera unit 21 so that there is no space between the housing 20 and the camera unit 21 and the foreign particle is effectively prohibited from entering into the image capture module 2. Moreover, the surface 231 of the elastic element 23 on which the light beam is incident has the rough structure to effectively reflect or absorb useless light from the outside.

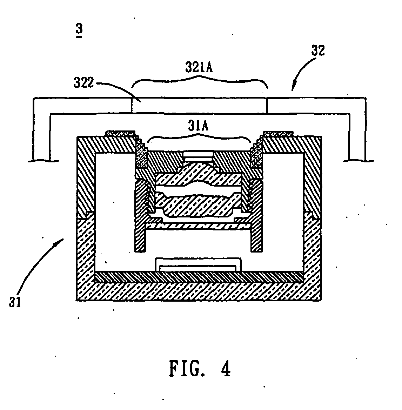

In addition, with reference to FIG. 4, an electronic device 3 according to a preferred embodiment of the invention includes an image capture module 31 and a main body 32.

Due to the structure, disposition, and function of the image capture module 31 are the same as those mentioned above, so the detailed description are omitted herein.

The main body 32 has a second opening 321A and a transparent cover 322. The image capture module 31 is disposed in the main body 32. The second opening 321A is corresponding disposed with the first opening 31A. The transparent cover 322 covers the second opening 321. In the present embodiment, the electronic device 3 can be a mobile phone and the main body 32 can be the housing of the mobile phone. Certainly, the electronic device 3 also can be else electronic products having image capture function.

In conclusion, the electronic device and the image capture module thereof of the invention are by way of disposing a shielding element between the camera unit and the housing. Specially, the shielding element is disposed around the camera unit such that the first opening of the housing is covered by the shielding element and the camera unit. Due to no space between the housing and the camera unit, the purpose of prohibiting the foreign particles from entering into the image capture module is achieved. Moreover, the shielding element can be elastic for absorbing the shock generated in the movement of the camera unit corresponding to the first opening. Therefore, the image capture module of the invention further has a shock absorbing ability. In addition, the surface of the shielding element can be designed for having a rough structure, such as a waved structure or a ladder structure. The rough structure is used to absorb or reflect the useless light beams for image generation so as to improve the quality of the image. Furthermore, the shielding element can be doped with mental particles to reduce interference of the electromagnetic wave.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An image capture module, comprising:
a housing (20), which has a first opening (201A);
a camera unit (21), which is accommodated in the housing and is adjacent to the first opening, wherein the first opening exposes at least one portion of the camera unit; and
a shielding element (23), which is disposed between the camera unit and the housing, wherein the shielding element is disposed around the camera unit such that the shielding element and the camera unit cover the first opening;
**characterised in that**
a transmission element is provided, which drives the camera unit (21) close to or away from the first opening (201A), and
the shielding element (23) is elastic and is compressed when the camera unit is close to the first opening and the shielding element is restored when the camera unit is away from the first opening.

2. The image capture module of claim 1, wherein the camera unit comprises a barrel (211) and a lens assembly (212), the barrel comprises a container (2111) where the lens assembly is accommodated.

3. The image capture module of claim 1, wherein the surface of the shielding element (23) has a rough structure.

4. The image capture module of claim 1, wherein the surface of the shielding element (23) has a ladder structure.

5. The image capture module of claim 1, wherein the surface of the shielding element (23) has a waved structure.

6. The image capture module of claim 1, wherein the elastic shielding element (23) is made of rubber or plastic.

7. The image capture module of claim 1, wherein the shielding element (23) is doped with mental particles.

8. The image capture module of claim 1, further comprising:
a sensor (24), which is accommodated in the housing and is used to receive a light beam passing through the camera unit.

9. An electronic device, comprising:
an image capture module (2; 31) according to any of claims 1 to 8; and
a main body (32), which the image capture module (2; 31) is accommodated in, has a second opening (321A) and a transparent cover (23), the second opening is correspondingly disposed with the first opening, and the transparent cover covers the second opening.

## Patentansprüche

1. Bildaufnahmemodul mit :
einem Gehäuse (20), das eine erste Öffnung (201A) aufweist,
einer Kameraeinheit (21), die in dem Gehäuse aufgenommen ist und benachbart zu der ersten Öffnung liegt, wobei die erste Öffnung wenigstens einen Teil der Kameraeinheit frei läßt, und
ein Abschirmungselement (23), das zwischen der Kameraeinheit und dem Gehäuse angeordnet ist, wobei das Abschirmungselement in der Weise um die Kameraeinheit herum angeordnet ist, daß das Abschirmungselement und die Kameraeinheit die erste Öffnung überdecken,
**dadurch gekennzeichnet, daß**
ein Übertragungselement vorgesehen ist, das die Kameraeinheit (21) näher an die erste Öffnung (201A) heran oder weiter von dieser weg bringt, und
das Abschirmungselement (23) elastisch ist und komprimiert wird, wenn sich die Kameraeinheit nahe bei der ersten Öffnung befindet, und das Abschirmungselement in seiner Form wiederhergestellt wird, wenn die Kameraeinheit von der ersten Öffnung entfernt ist.

2. Bildaufnahmemodul nach Anspruch 1, bei dem die Kameraeinheit einen Tubus (211) und eine Linsenanordnung (212) aufweist, wobei der Tubus einen Behälter (2111) aufweist, in dem die Linsenanordnung aufgenommen ist.

3. Bildaufnahmemodul nach Anspruch 1, bei dem die Oberfläche des Abschirmungselements (23) eine aufgeraute Struktur hat.

4. Bildaufnahmemodul nach Anspruch 1, bei dem die Oberfläche des Abschirmungselements (23) eine Struktur nach Art einer Leiter hat.

5. Bildaufnahmemodul nach Anspruch 1, bei die Oberfläche des Abschirmungselements (23) eine gewellte Struktur hat.

6. Bildaufnahmemodul nach Anspruch 1, bei das elastische Abschirmungselement (23) aus Gummi oder Kunststoff hergestellt ist.

7. Das Bildaufzeichnungsmodul nach Anspruch 1, bei dem das Abschirmungselement (23) mit Metallpartikeln dotiert ist.

8. Bildaufnahmemodul nach Anspruch 1, weiterhin mit:
einem Sensor (24), der in dem Gehäuse untergebracht ist und dazu verwendet wird, einen Lichtstrahl zu empfangen, der durch die Kameraeinheit hindurch geht.

9. Elektronische Einrichtung mit:
einem Bildaufnahmemodul (2; 31) nach einem der Ansprüche 1 bis 8 und
einem Hauptkörper (32), in dem das Bildaufnahmemodul (2; 31) untergebracht ist und der eine zweite Öffnung (321A) und eine transparente Abdeckung (23) hat, wobei die zweite Öffnung korrespondierend zu der ersten Öffnung angeordnet ist und die transparente Abdeckung die zweite Öffnung überdeckt.

## Revendications

1. Module de capture d'image, comportant :
un boîtier (20), lequel a une première ouverture (201A),
une unité d'appareil de prise de vues (21), laquelle est contenue dans le boîtier et est adjacente à la première ouverture, la première ouverture exposant au moins une partie de l'unité d'appareil de prise de vues, et
un élément de blindage (23), lequel est disposé entre l'unité d'appareil de prise de vues et le boîtier, l'élément de protection étant disposé autour de l'unité d'appareil de prise de vues de sorte que l'élément de protection et l'unité d'appareil de prise de vues recouvrent la première ouverture,
**caractérisé en ce que**
un élément de transmission est fourni, lequel approche ou éloigne l'unité d'appareil de prise de vues (21) de la première ouverture (201A), et
l'élément de protection (23) est élastique et est comprimé lorsque l'unité d'appareil de prise de vues est proche de la première ouverture et l'élément de protection est rétabli lorsque l'unité d'appareil de prise de vues est éloignée de la première ouverture.

2. Module de capture d'image selon la revendication 1, dans lequel l'unité d'appareil de prise de vues comporte un cylindre (211) et un ensemble d'objectif (212), le cylindre comportant un réceptacle (2111) dans lequel l'ensemble d'objectif est contenu.

3. Module de capture d'image selon la revendication 1, dans lequel la surface de l'élément de protection (23) a une structure rugueuse.

4. Module de capture d'image selon la revendication 1, dans lequel la surface de l'élément de protection (23) a une structure en peau de crapaud.

5. Module de capture d'image selon la revendication 1, dans lequel la surface de l'élément de protection (23) a une structure ondulée.

6. Module de capture d'image selon la revendication 1, dans lequel l'élément de protection élastique (23) est constitué de caoutchouc ou de matière plastique.

7. Module de capture d'image selon la revendication 1, dans lequel l'élément de protection (23) est dopé avec des particules métalliques.

8. Module de capture d'image selon la revendication 1, comportant en outre :
un détecteur (24), lequel est contenu dans le boîtier et est utilisé pour recevoir un faisceau lumineux traversant l'unité d'appareil de prise de vues.

9. Dispositif électronique, comportant :
un module de capture d'image (2 ; 31) selon l'une quelconque des revendications 1 à 8, et
un corps principal (32), dans lequel le module de capture d'image (2 ; 31) est contenu, comportant une seconde ouverture (321A) et un couvercle transparent (23), la seconde ouverture est disposée en correspondance avec la première ouverture, et le couvercle transparent recouvrant la seconde ouverture.
